(19) **Europäisches Patentamt / European Patent Office / Office européen des brevets**

(11) **EP 4 292 889 A1**

(12) **EUROPEAN PATENT APPLICATION**

(43) Date of publication:
**20.12.2023 Bulletin 2023/51**

(21) Application number: **22178633.8**

(22) Date of filing: **13.06.2022**

(51) International Patent Classification (IPC):
**B60T 8/172** (2006.01)     **B60T 8/174** (2006.01)

(52) Cooperative Patent Classification (CPC):
**B60T 8/172; B60T 8/174; B60W 40/068;**
B60T 2210/12; B60T 2210/122; B60T 2270/86

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **KNORR-BREMSE Systeme für Nutzfahrzeuge GmbH**
**80809 München (DE)**

(72) Inventors:
• **HECKER, Falk**
 **71706 Markgröningen (DE)**
• **GÜCKER, Ulrich**
 **71701 Schwieberdingen (DE)**
• **WITZEL, Paul**
 **70435 Zuffenhausen (DE)**
• **SAUER, Roman**
 **70569 Stuttgart (DE)**
• **GÖLTZ, Simon**
 **73650 Winterbach (DE)**
• **SAWODNY, Oliver**
 **70186 Stuttgart (DE)**
• **MUSTAPHA, Adnan**
 **75433 Maulbronn (DE)**

(54) **A METHOD AND AN APPARATUS FOR ESTIMATING A FRICTION COEFFICIENT OF A VEHICLE WHEEL**

(57) A method for estimating a friction coefficient of a vehicle wheel, includes the steps of measuring (S110) of one or more parameters defining part of a vehicle state; estimating (S120) the friction coefficient based on a model that describes dependencies of the vehicle state and the friction coefficient; updating (S130) the model during operation of the vehicle; and providing (S140) the friction coefficient or a parameter depending on the friction coefficient.

S110 — measuring of the parameter(s) defining part of a vehicle state

S120 — estimating the friction coefficient based on a model of the vehicle state

S130 — updating the model during operation of the vehicle

S140 — providing the friction coefficient or a parameter depending on the friction coefficient

Fig. 1

EP 4 292 889 A1

**Description**

The present invention relates to a method and an apparatus for estimating a friction coefficient (friction value) of a wheel and, in particular, to an automated friction value estimate during regular driving situations without performing dedicated maneuvers.

The driving behavior has to be adapted to particular road conditions such as snow, ice, rain, wet leaves or other conditions. These road conditions together with tire parameters (e.g. tire geometry, tire thread, tire material, tire pressure etc.) determine an achievable brake performance.

A human driver does this more or less intuitively. However, when employing an automated driving function further information is needed to make correct decisions when performing the automated driving maneuvers. For example, slip values can be measured for each wheel and are taken into account by anti-blocking system (ABS), for example. These slip values depend on the friction coefficient at the different wheels, wherein the friction coefficient provides an indication for the brake performance, because it defines a maximal applicable friction force on a given wheel for a given force of gravity exerted on that wheel.

Unfortunately, there is no simple way of determining the friction coefficient. One possible way is to expose the vehicle to a critical driving condition to trigger sufficiently high slip values from which one may infer the friction coefficient for that road. However, such maneuvers often involve safety issues and shall be avoided whenever possible.

Therefore, there is a demand for an estimator for friction values that provides reliable results for the friction values without exposing the vehicle to critical driving conditions.

At least some of the above-mentioned problems are overcome by a method according to claim 1 or an apparatus according to claim 11. The dependent claims refer to further advantageous realizations of the subject matter of the independent claims.

The present invention relates to a method for estimating a friction coefficient of a vehicle wheel. The method includes:

-    measuring one or more parameters defining (at least) part of a vehicle state;
-    estimating the friction coefficient based on a model that describes dependencies of the vehicle state and the friction coefficient;
-    updating the model during operation of the vehicle; and
-    providing the friction coefficient or a parameter depending on the friction coefficient.

The result can be provided to the driver or to a control unit. The driver may receive an alert if the friction coefficient falls below a (lower) threshold. For example, autonomous driving maneuvers such as a braking, a steering, a vehicle speed may be adjusted based on the determined friction coefficient.

A person skilled in the art will understand the term "vehicle state" as relating to any information suitable to describe the vehicle and its future behavior. Under normal conditions, the complete vehicle state is not known, but may be approximated more or less accurately based on information that can be derived from various sensors installed on or in the vehicle. For example, the vehicle state during driving may be determined based on the longitudinal speed (in direction of vehicle motion), the lateral speed (perpendicular to the vehicle motion), the yaw rate, the longitudinal acceleration, and the lateral acceleration. In addition, parameters such as the mass, the steering angle, rotational speeds of the wheels are likewise parameters determining a vehicle state and are to be considered to determine more or less accurately a given vehicle state when operating the vehicle.

It is further understood that an estimation of the friction coefficient may be equivalent to estimation of a brake performance. A person skilled in the art will understand the higher the friction coefficient the better the brake performance, because the friction coefficient defines a maximal exercisable force for a given force of gravity before the vehicle starts sliding.

The term "during operation" should be understood as a normal driving condition. In particular, embodiments do not need dedicated maneuvers for determining the friction coefficient. Although some friction has to be exerted when determining the friction coefficient, a normal acceleration, braking, steering etc. may be sufficient to determine the friction coefficient.

Optionally, the step of estimating includes estimating of at least one of the following parameters: a longitudinal acceleration, a lateral acceleration, a longitudinal speed, a lateral speed, a yaw rate, a radius of at least one tire, a stiffness of at least one tire.

Optionally, the step of measuring of at least one parameter include one or more of the following parameters: a steering angle, a rotating speed of at least one wheel, an actual longitudinal acceleration, an actual lateral acceleration, an actual longitudinal speed, an actual yaw rate. It is understood that the supplement "actual" may imply a different value when compared to the estimated parameters.

Optionally, the step of updating includes at least one of the following:

- comparing estimated parameters with measured parameters and adapting the model based on the comparison,
- estimating a correction of the radius of at least one tire,
- estimating a correction of the stiffness of at least one tire.

Optionally, at least some of the steps are only carried out upon an activation, wherein the activation is triggered by one or more of the following:

- a condition derived from the measured parameters is fulfilled,
- a condition derived from the estimated parameters is fulfilled,
- one or more of the measured parameters having exceeded a threshold (or lower or upper),
- a rate of change of one or more of the measured parameters having exceeded another threshold (or lower or an upper).

According to embodiments, events such as braking, steering, acceleration may be used to improve the estimation for the friction coefficient continuously. Optionally, each such event may be considered for as long as the results do not yet meet a desired quality (e.g. if the deviations are not yet below a predetermined threshold). In particular, there is no need to perform specific maneuverers that include critical conditions, e.g., with high slip values. Furthermore, embodiments may also consider changing weather conditions. For example, sensor data from a temperature sensor or a moisture sensor may trigger an estimation of the friction or an update thereof. Furthermore, the changing weather conditions may be incorporated into the model. For example, the temperature and/or the wetness of the road may be parameters in the model.

Optionally, the step of estimating further utilizes at least one of the following: a slip value of at least one wheel, a slip angle, a mass of at least one wheel, a brake pressure, the radius of at least one tire, the stiffness of at least one tire.

Optionally, the step of estimating includes utilizing at least one of the following algorithms or functions: a Kalman filtering, a machine learning or using the model created by a machine learning, a neural network or using the model created by a neural network, or a combination thereof. It is understood that these algorithms may be implemented in software and could be realized as software modules.

Optionally, the method comprises creating or improving the model by one or more of the following:

- training a machine learning algorithm with training data derived under predetermined conditions,
- training a neural network algorithm with training data derived under predetermined conditions,
- improving the created model by successive learning during operation of the vehicle.

Further embodiments relate to a method for creating a model for a vehicle and/or tires of the vehicle, wherein the method includes:

- training a machine learning algorithm with training data derived under predetermined conditions, or
- training a neural network algorithm with training data derived under predetermined conditions.

The created model may then be utilized in the method for estimating a friction coefficient of a vehicle wheel as described before.

It is further understood that the order of method step may be different.

The method for estimating a friction coefficient of a vehicle wheel and/or the method for creating a model used in the method for estimating may be implemented at least in part in software in any data processing unit, and in particular in any control unit of the vehicle. Therefore, the methods described above may be computer-implemented methods and embodiments relate also to a computer program product or a computer-readable storage device comprising program code for carrying out at least some of the steps of the described methods, when the program code is executed on a data processing unit.

Further embodiments relate to an apparatus for estimating a friction coefficient of a vehicle wheel. The apparatus comprises a control unit including a processor and a memory with stored instructions that, when executed on the processor, cause the following:

- measuring of one or more parameters defining part of a vehicle state;
- estimating the friction coefficient based on a model that describes dependencies of the vehicle state and the friction coefficient;
- updating the model during operation of the vehicle; and
- providing the friction coefficient or a parameter depending on the friction coefficient.

The control unit may be any data processing device in a vehicle. The apparatus may thus be configured to carry out the method steps as defined before.

Optionally, the apparatus may comprise at least one of the following:

- a Kalman filter,
- a machine learning module,
- a neural network engine,

to implement the estimation of the friction coefficient. It is understood that these features may rely on algorithms (or methods) that could be implemented as software modules to provide the respective functions (e.g. the filter, a machine learning, a neural network engine etc.).

Further embodiments relate to vehicle, in particular to commercial vehicles such as long-haul vehicles with or without a trailer, wherein the vehicle comprises the apparatus as described before that implements a method as described before.

Embodiments define thus a friction value estimator that is able to estimate the friction values between the vehicle wheel and the road, which at the same time enables an improved estimation for the brake performance.

A person skilled in the art will understand a Kalman filter as utilized in embodiments to define an algorithm to produce estimates of unknown variables based on measurements of parameters observed over time that may be inaccurate to some degree. The achievable results by estimating a joint probability distribution over the variables for each timeframe are, ideally, more accurate than those based on a single measurement alone. The Kalman filter may be based on a rigid model that defines dependencies of the various parameters to produce estimates also for values that are not measured concretely.

A person skilled in the art understands a "machine learning system" as a system that is typically associated with a method that learns from examples without being specifically be programed for the specific purpose. A machine learning system is seen as part of an artificial intelligence which configures itself to achieve a particular purpose. For this, the machine learning system may be fed with training data which should produce predetermined results. The result or the deviation from the expected result is fed back to improve the estimation in the next round. When the output is estimated with sufficient precision - e.g. within a predetermined error rate - the machine learning system is said to be trained. Several machine learning systems are known. These include neural networks such as recurrent neural networks (RNN). According to embodiments, the machine learning is understood in a broad sense in that includes also the fitting and adaptations of parameters, which can be done dynamically to improve the estimates.

A person skilled in the art understands a "recurrent neural network" as a neural network that, in contrast to feed-forward networks, are characterized by connections of neurons (i.e. nodes) of one layer to neurons of the same or a previous layer. In the brain, this is the preferred mode of interconnection of neural networks, especially in the neocortex. In artificial neural networks, recurrent wiring of model neurons is often used to discover temporally encoded - i.e., dynamic - information in the data. Examples of such recurrent neural networks include the Elman network, the Jordan network, the Hopfield network, and the fully interconnected neural network.

Some examples of the systems and/or methods will be described in the following by way of examples only, and with respect to the accompanying figures, in which:

Fig. 1      depicts a schematic flow chart for a method for estimating a friction coefficient according to an embodiment of the present invention;

Fig. 2A,2B      illustrate embodiments for an apparatus for estimating the friction coefficient according to an embodiment;

Fig. 3      illustrates further details for the apparatus for estimating the friction coefficient based on a dynamical Kalman filter according to another embodiment;

Fig. 4A,4B      illustrate embodiments for adaptions related to a dynamical change of the wheel radius and for the tire;

Fig. 5      illustrates an embodiment for estimating a friction value in a system using a machine learning algorithm or a neural network;

Fig. 6      illustrates an example for the achieved friction value estimation;

Fig. 7      depicts the observability for driving states with a friction coefficient estimation according to embodiments.

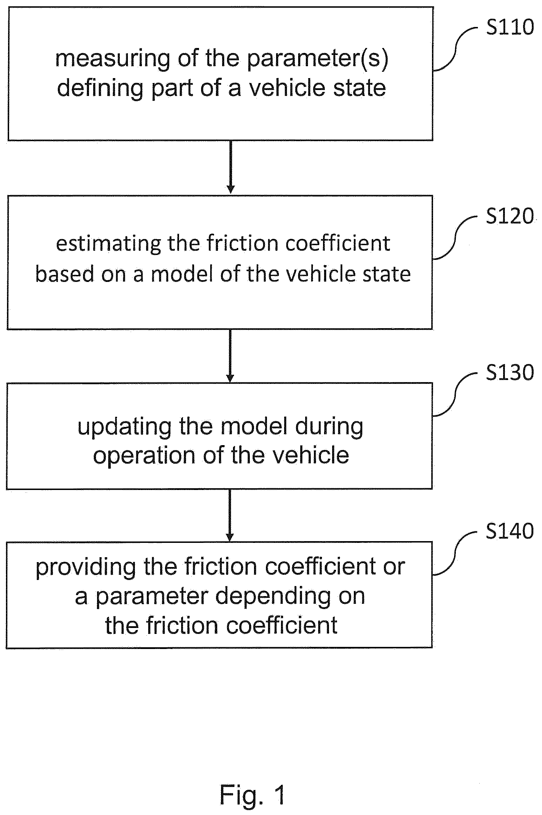

**Fig.** 1 depicts a schematic flow chart for a method for estimating a friction coefficient between at least one vehicle wheel and the road. The method includes the steps of:

- measuring S110 of one or more parameters defining part of a vehicle state;
- estimating S120 the friction coefficient based on a model that describes dependencies of the vehicle state and the friction coefficient;
- updating S130 the model during operation of the vehicle; and
- providing S140 the friction coefficient or a parameter depending on the friction coefficient.

It is understood that the friction coefficient is not a vehicle parameter although it depends on tire parameter such as its geometry, threads, material. More importantly, embodiments take dynamically into account road conditions that may increase the risk of slipping due to moisture, ice, leaves or road slopes or wind conditions.

A person of skill in the art would readily recognize that at least some steps of described methods may be performed by programmed computers. Therefore, this method may also be a computer-implemented method and embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

The parameters defining the vehicle state are measured over time. Even though the actual state of the vehicle does not change, the measured values will be different due various inaccuracies. Therefore, the correct values of the parameters may only be estimated based on time series of measurements with an optional statistical analysis. Consequently, an acceptable accuracy may be achieved. Embodiments use this algorithm not only to predict accurate values for measured quantities, but to obtain at the same time the friction coefficient, which otherwise could not be measured during regular operation of a vehicle.

For this, an appropriate vehicle model is utilized. This model describes the vehicle state and includes a model for the tires as well as a model for the vehicle itself. It describes the dynamics of the vehicle caused by the acting forces and/or accelerations. In general, the vehicle model is defined by a set of differential equations such as:

$$\frac{\mathrm{d}^V v_x}{\mathrm{d}t} = \dot{\psi}\, v_y + {}^V a_{x,\mathrm{mess}}$$

$$\frac{\mathrm{d}^V v_y}{\mathrm{d}t} = -\dot{\psi}\, v_x + \frac{1}{m_0} \sum_i {}^V F_{y,i}$$

$$\ddot{\psi} = \frac{1}{\Theta_{\mathrm{veh},zz}} \sum_i \left( {}^V F_{y,i}\, {}^V p_{0,\mathrm{ch},i,x} - {}^V F_{x,i}\, {}^V p_{0,\mathrm{ch},i,y} \right)$$

$$\dot{a}_x = \frac{1}{T_{\mathrm{ax}}} \left[ \frac{1}{m_{\mathrm{eq}}} \left( \sum_i \left( {}^V F_{x,i} \right) - {}^V F_{\mathrm{air}} \right) - a_x \right]$$

$$\dot{a}_y = \frac{1}{T_{\mathrm{ay}}} \left[ \frac{1}{m_0} \left( \sum_i \left( {}^V F_{y,i} \right) \right) - a_y \right]$$

$$(1)$$

Wherein: a dot indicates a time derivative, the index in front of a quantity defines the used coordinate system (vehicle=v, tire=T) and the other quantities are defined as follows:

$v_x$      longitudinal speed
$v_y$      lateral speed
ax      longitudinal acceleration
$a_y$      lateral acceleration
$F_{x,y}$      longitudinal (index x)/lateral (index y) forces
Fair      force exerted by air
i      counts the wheels)
mo      mass of the vehicle
$m_{\mathrm{eq}}$      equivalent rotational masses of the wheels
$\mathrm{d}\psi/\mathrm{d}t$      yaw rate

The forces can be calculated using the formula of the tire model, which read:

$$F_{t,i,\max} = \tilde{\mu} \cdot {}^{T_i}F_{t,i,z} \cdot \left(1 + k_{\text{fz}} \cdot \left(1 - \frac{{}^{T_i}F_{t,i,z}}{F_{z,0}}\right)\right)$$

$$s_{\text{ges}} = \sqrt{s_i^2 + \alpha_i^2} + 0.001$$

$${}^{T_i}F_{t,i,x} = k_{\text{fx}} F_{t,i,\max} \sin\left(C_x \arctan\left(\frac{\tilde{B}_x}{\tilde{\mu}} s_{\text{ges}}\right)\right) \frac{s_i}{s_{\text{ges}}}$$

$${}^{T_i}F_{t,i,y} = -F_{t,i,\max} \sin\left(C_y \arctan\left(\frac{\tilde{B}_y}{\tilde{\mu}} s_{\text{ges}}\right)\right) \frac{\alpha_i}{s_{\text{ges}}}$$

$$(2)$$

wherein μ is the friction coefficient and k is the braking factor. The slip $s_i$ and the slip angle $\alpha_i$ satisfy the equations:

$$\kappa_i = \frac{\omega \cdot r_{\text{dyn}} - v_{\text{x}}}{\max(0.15, |v_{\text{x}}|, |\omega \cdot r_{\text{dyn}}|)}$$

$$\alpha_i = \arctan\left(\frac{v_{\text{y}}}{\max(0.15, |v_{\text{x}}|, |\omega \cdot r_{\text{dyn}}|)}\right)$$

$$s_i = k_{\text{k}} \kappa_i$$

$$(3)$$

wherein $\omega$ is the angular speed of the wheel and r is the (dynamic) radius of the wheel. The vertical wheel forces can be obtained from a quasi-stationary approximation of the force and the momentum equilibrium at the center of gravity (wherein h is the height over the plane of the hubs):

$$m_0\, g = \sum_i F_{z,i}$$

$$M_{\text{y}} = m_0 \left(h_0 + r_{\text{wheel}}\right) a_x = \sum_i {}^{V}p_{0,\text{ch},i,x}\, F_{z,i}$$

$$M_{\text{x}} = m_0\, h_0\, a_y = \sum_i {}^{V}p_{0,\text{ch},i,y}\, F_{z,i}$$

$$(4)$$

wherein the wheel forces $F_{z,i}$ includes the vertical wheel spring force $F_{z,i,c}$ and the stabilization force $F_{z,l,s}$ depending on the wheel position $p_{z,l}$ which are given by:

$$F_{z,i,c} = c_i\, p_{z,i}$$

$$F_{z,i,s} = c_{stabi} \left(p_{z,1} - p_{z,i,opp}\right)$$

$$p_{z,i} = p_0 + {}^{V}p_{0,\text{ch},i,y}\, \tan(\varphi_{\text{wc}}) - {}^{V}p_{0,\text{ch},i,x}\, \tan(\vartheta_{\text{wc}})$$

$$\approx p_0 + {}^{V}p_{0,\text{ch},i,y}\, \varphi_{\text{wc}} - {}^{V}p_{0,\text{ch},i,x}\, \vartheta_{\text{wc}}$$

$$(5)$$

These equations can be solved once offline, when building the model for $p_0$, $\vartheta_{\text{wc}}$ and $\varphi_{\text{wc}}$. As a result, the model for the vehicle as well as the for the tires are defined and will provide starting vales, which successively can be improved.

The formulas (1) to (5) define an example of the underlying vehicle model and include parameters that can be fitted or adapted to improve the estimate. In addition, measured quantities such as the speeds can be obtained measurement and thus may also change in time.

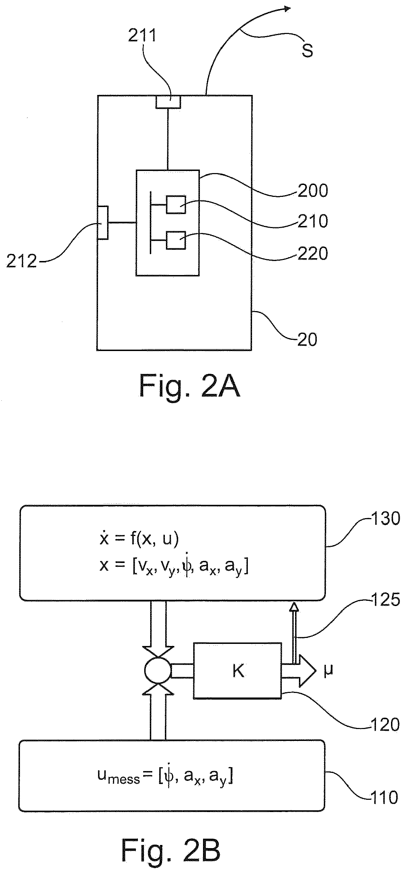

Fig. 2A depicts an apparatus for estimating a friction coefficient for a wheel of a vehicle 20. The apparatus comprises a control unit 200 including a processor 210 and a memory 220 with stored instructions that, when executed on the processor, cause the steps of the method as shown in Fig. 1. The processor 210 and the memory 220 are connected with each other and are able to obtain sensor data from different sensors 211, 212 that measure various quantities defining the vehicle state such as steering angle (to follow a road bend S), speed and/or accelerations and others.

**Fig. 2B** illustrates an embodiment for an apparatus with further details for estimating the friction coefficient $\mu$. The apparatus comprising measuring unit 110, a friction estimation unit 120, and a modelling unit 130, which may be implemented in the control unit 200 via the installed software. The measuring unit 110 is configured to obtain measured values u e.g. from sensors in the vehicle or via a vehicle communication system. The measured values may include a yaw moment $d\psi/dt$, a longitudinal acceleration $a_x$ and a lateral acceleration $a_y$. The modeling unit 130 includes the vehicle model as described before, which is illustrated here only schematically as a differential equation with the solution indicated by the vector x. Apart from the measured values also the longitudinal and lateral speed $v_{x,y}$ of the vehicle is determined.

The apparatus comprises further a friction estimation unit 120, which is configured to estimate the friction coefficient $\mu$ based on the results from the modeling unit 130 and the measured values from the measurement unit 110. The estimation unit 120 is further configured to determine a correction between measured values u and the corresponding parameters derived from the underlying model. These corrections are provided via a feedback 125 to the modelling unit 130 to improve the model to finally minimize the error. At the same time, the value for the friction coefficient $\mu$ will successively improve. This procedure is utilized, for example, in a Kalman filter.

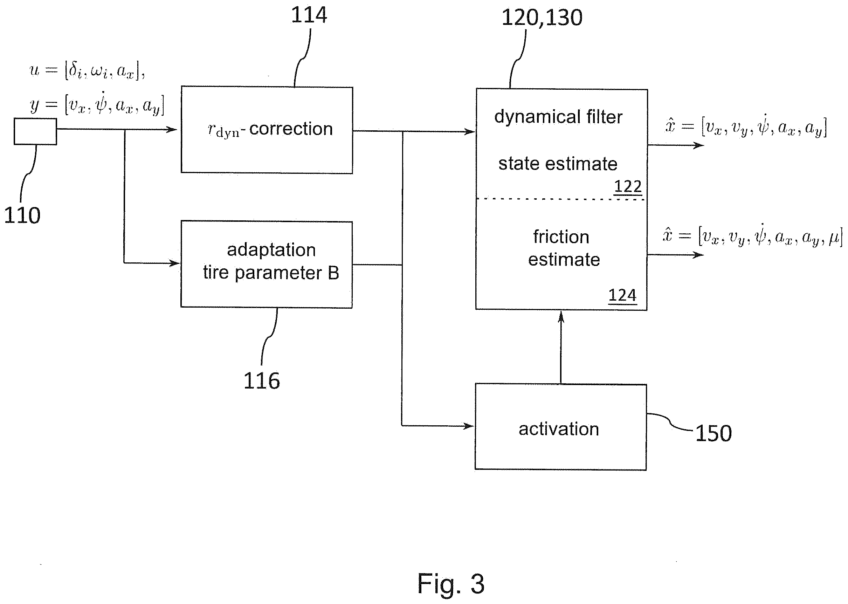

**Fig. 3** illustrates further details for the apparatus for estimating the friction coefficient $\mu$ based on a dynamical filter such as a Kalman filter according to an embodiment. The apparatus obtains measured values u, y from the measuring unit 110. The system further includes a first correction unit 114 and a second correction unit 116. The first correction unit 114 is configured to dynamically correct tire radius $r_{dyn}$ and the second correction unit 116 adapts the tire parameter B (tire stiffness), which may change in the long-term. The corrections will enter the model for estimating the friction coefficient $\mu$ in the estimation unit 120. In addition, the estimation unit 120 may obtain the measured values u, y and generates estimations defining the vehicle state $\hat{x}$ and possibly an additional estimate for the friction coefficient $\mu$. The estimation unit 120 may be again a dynamical filter such as a Kalman filter and includes a driving state estimation module 122 and a friction estimation module 124.

In general the vector u may include control value which can be changed (e.g. a steering angle) whereas y are general measured input values (e.g. speed values) and x may define the vehicle state. However, this distinction is not always consistent, because control value may also be obtained by measurement.

The driving state estimation unit 122 may be configured to generate an estimate for the vehicle state $\hat{x}$ which comprises, e.g., the longitudinal and lateral speed $v_{x,y}$, yaw rate $d/dt\ \psi$, longitudinal and lateral acceleration ax,y. This estimation may be performed by a comparison of measured values y with values obtained from a vehicle and tire model in a DD2 filter (a dynamic filter based on an algorithm for estimating a state of non-linear systems, similar to Kalman filter), wherein the model uses of measurement data and vehicle and tire parameters.

The friction estimation module 124 may be configured to generate an estimate for the friction coefficient $\mu$. This may not always be possible. For example, when the vehicle is not subjected to an acceleration or if there is no slip at any of the wheels, the estimation of friction may be not be possible. However, if possible, the additional estimation of friction coefficient $\mu$ may be activated. The friction estimation module 124 may be configured to select suitable time points (e.g. by means of observability study) to perform the friction estimation. However, according to embodiments, there is no explicit, active excitation such as an unnecessary brake intervention or a redistribution of forces etc. The excitation may be triggered by excitations (trigger events) in longitudinal and transverse direction.

The friction estimation may be activated, according to embodiments, based on one or more of the following values: a steering angle, a rotating speed of at least one wheel, an actual longitudinal acceleration, an actual lateral acceleration, an actual longitudinal speed, an actual yaw rate.

According to embodiments, the apparatus comprises an activation unit 150, which is configured to trigger an estimation of the friction coefficient when at least one condition is met. These conditions include, for example, that the measured and/or estimated parameters fulfill a relation directly or indirectly, wherein "indirectly" means that a condition derived from the respective parameters is fulfilled. For example, the parameters or their rate of change may exceed a predetermined threshold.

It is understood that the estimation of the friction coefficient $\mu$ is equivalent to an estimation of the brake performance, because the maximal brake force is a_max = $\mu$*m*g, where m is the mass and g is the earth acceleration. However, the determination may be different, since the brake performance is a maximal achievable (negative) acceleration. The brake performance will, however, also depend on vehicle parameters such as the mass, whereas the friction coefficient is primarily be fixed by the road condition and the properties of the particular tire.

According to further embodiments, the estimation unit 120, 130 is configured to estimate simultaneously also tire parameters (contact area, tire thread etc.). Furthermore, the estimation unit 120, 130 may further provide (improved) estimates for wheel radius correction ("$r_{dyn}$ correction") and/or the tire stiffness parameter B ("long-term tire adaptation"). Both updated quantities will then enter again the vehicle model as described above.

Various effects are important in different time scales and embodiments will take them into account. For example, there are very slow varying, long-term tire adaptation (e.g. over days/weeks). Other modifications occur at a medium-term time scale such as changes in r_dyn (e.g. in minutes or hours). Yet other modifications within the friction estimate occur in seconds (e.g. caused by increased tire temperature during braking). Since these alterations have different effects on the expected friction, embodiments differentiate between these effects. For example, corrections may be classified with respect to these three classes and the estimation unit 120 may consider the classified corrections differently, dependent whether the correction is based on short-, middle-, or long-term effect. For example, the estimates are updated based on the class such that short-term alterations are updated at any estimate, whereas middle-term or long-term alterations are updated less frequent.

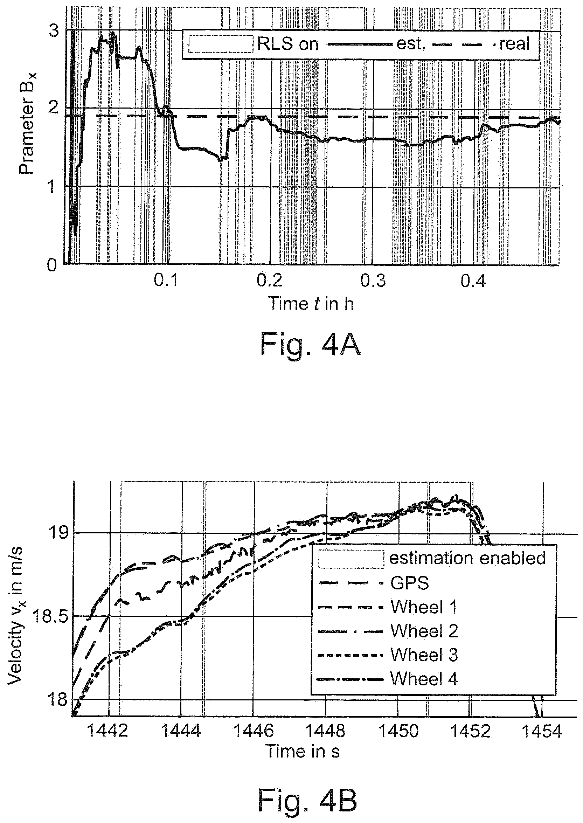

The correction or adaptations caused by the first and second correction units 114, 116 are illustrated with **Fig. 4A** and **Fig. 4B.** Fig. 4A depicts an example for this long-term tire adaptation, wherein the tire parameter B is estimated approximately over one hour.

The tire parameter B depicted in Fig. 4A is defined in the tire model of Placejka (in the so-called magic formula) and is a measure for the stiffness of the tire that, typically, does not change quickly. For example, it may take days or weeks until a stiffness of a tire (which determines the B-parameter) may show significant changes. Therefore, the parameter B is assumed to be constant in Fig. 4A. The estimates are performed using the RLS algorithm (RLS = recursive least square) at particular time periods indicated by the dashed boxes. Fig. 4A clearly shows that at the beginning the deviations between real and estimated values are significant, but become smaller over the time of estimates. For example, over 0.5 hours the estimates agree already quite good with real values. Based on these deviations, the tire parameter may be corrected.

Similarly, according to embodiment, the rotational speed of the wheel will be corrected. For example, the wheel speed of the wheels may be measured over some time (e.g. some minutes) and compared with each other. As shown in Fig. 4B, the wheel speeds may slightly differ from one another. In addition, the speed of the vehicle may be measure with a global positioning system such as GPS. With the on-going estimate, the differences become lower and lower indicating that the estimates become better and better. All speeds can be compared to derive corrections that may be taken into account for improving the estimation results. Fig. 4B depicts an example of a wheel radius correction, wherein the speed of the wheels is adjusted to the GPS speed.

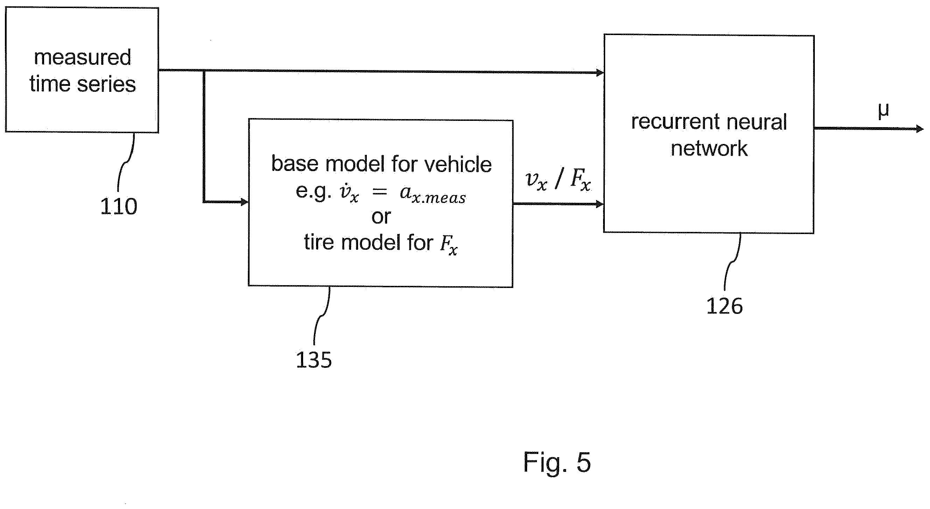

**Fig. 5** illustrates another embodiment where the friction value is estimated by a system using a neural network or a machine learning algorithm, which may estimate the friction value μ or another indicator for the brake performance based on exemplary time series of sensor data.

According to the shown embodiment, the acquired sensor data are obtained from the measuring unit 110 and are fed into an exemplary neural network estimator 126 and into a base modelling unit 135. The base modelling unit 135 used a simplified physical model for the vehicle to produce initial values for parameters which cannot immediately or only inaccurately be measured such as the longitudinal speed $v_x$ or the longitudinal force Fx. The simplified physical model may again be defined by a set of differential equations for the relevant parameter (as for the modelling unit 130 of Fig. 2). These initial values are further input for the neural network estimator 126. According to further embodiments, the base modelling unit 135 is dynamically adapted, e.g. by estimated vehicle parameters.

The neural network estimator 126 includes, e.g., a recurrent neural network which is suitable for modelling a time dependent, dynamically changing behavior. Since the sensor data represent time series, the recurrent neural network is particularly suitable as learning algorithm. In the learning process the neural network estimator 126 may set up its own model, which may differ from the physical model used in the base modelling unit 135 or in the modelling unit 130. The learning process utilizes training data which are associated with predefined output values for the friction coefficient μ or the other indicator for the brake performance.

According to further embodiments, the training data are determined as follows. Vehicle measurements are performed as functions of time, i.e. time series of the sensor data are generated. At the same time reference measurements for friction values are carried out. For this, a human/camera-based road classification can be utilized. The classification may include situation such as ice, snow, different degrees of rain. The friction values may be measured by laser-based micro-structure measurement. Another possibility is to measure friction values by Lidar-based micro-structure measurement or the tire and/or the road (sub-millimeter range). Furthermore the mobile mapping system S.T.I.E.R. (a multisensory system for detecting the road surface topography) may also be used for micro-structure measurements. Yet another known way to measure tire friction values use dedicated measuring device on test tracks and/or employing measuring trailers with test tires and equipment for friction measurements. By these means, it is possible to determine friction values under well-defined conditions and use them as training data in the learning process.

According to further embodiments, the training may be repeated. Even the normal operation may be used as supplemental training. For example, if a high quality of the estimation is achieved (e.g. characterized by a low statistical variation), subsequent maneuvers may be used as further training sessions.

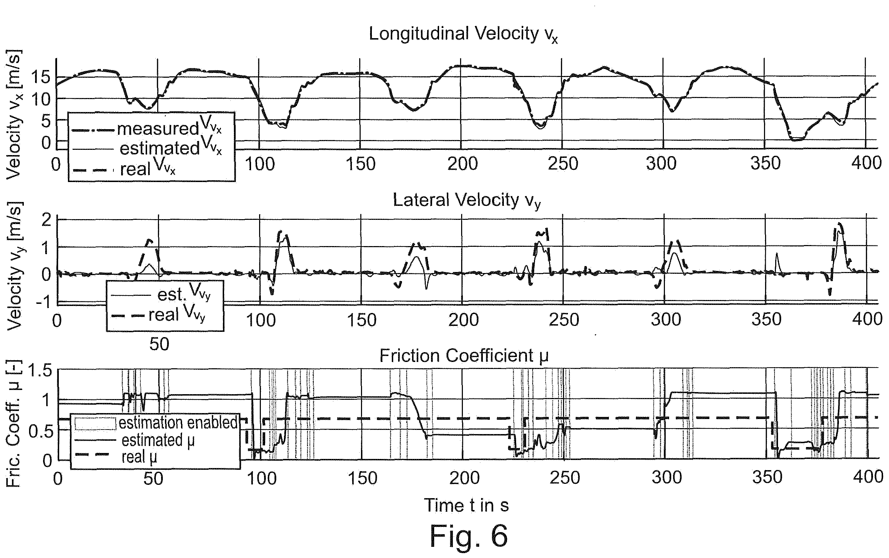

**Fig. 6** illustrates an example for the friction value estimation. These results were obtained on a brake test track with a low friction value section. Concretely, Fig. 6 shows at the top values for the longitudinal speed $v_x$, wherein the estimation and measurements are close to each other, because the longitudinal speed $v_x$ can be determined very accurately. The graphs in the middle show the measured and the estimated lateral speed $v_y$, the latter one is drawn in a solid line and the real speed in a dashed line. The measured lateral speed $v_y$ is the real or actual speed and represents a reference measurement technique in test vehicles. The decrease in the longitudinal speed relates to braking and the subsequent change in the lateral speed indicates a driving around one or more bends/curves. The graphs at the bottom show the coefficient of friction $\mu$ as real value (dashed line) and as estimated value (solid line).

The friction estimation was activated only at specific moments in time (shaded regions). Therefore, the estimation of the coefficient of friction changes only at these moments. The activation of the estimation may be triggered by various events. For example, the activation was triggered by one or more of the measured parameters having exceeded a threshold or by a rate of change for the one or more measured parameters. In the present situation, the trigger can be the steering angle or the actual (real) longitudinal acceleration or the actual (real) lateral acceleration or the actual (real) longitudinal speed or an actual yaw rate or a combination thereof. According to further embodiments, different triggers may be used at different times. This may improve the estimation result, because systematic errors may be eliminated.

As can be seen from the graphs in the middle, there is already a very good quality of the estimate. The graphs at the bottom show that especially a low friction coefficient is reliably detected.

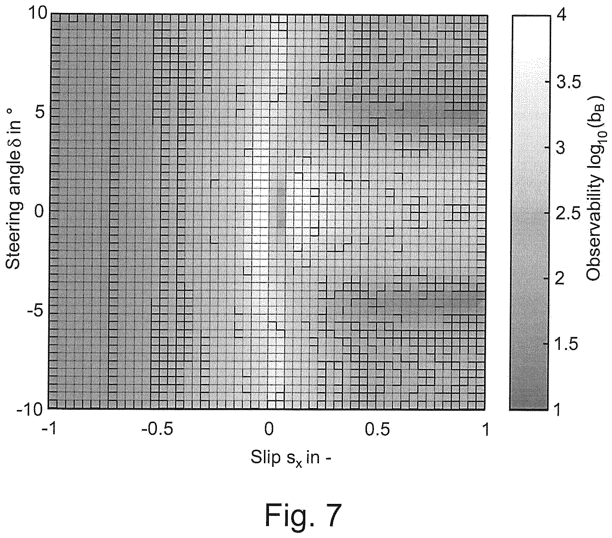

**Fig. 7** depicts the observability (or its logarithm) as function of the steering angle $\delta$ and the tire slip value $s_x$ for the driving states with a friction coefficient estimation. An observability measure b_B may be defined through derivatives of the outputs of the system (and/or their derivatives) with respect to the parameters/states, because they provide information about the reliability of the measurements (or their reproducibility).

Therefore, the regions of high observability are particularly suitable for performing the estimates. According to embodiments, the estimates (see Figs. 4A, 4B, 6) are performed during periods, when the observability is above a predetermined threshold. On the other hand, in region of low observability (below a given threshold), many disturbances may be present that prevent a reliable estimate. Since the estimation shall improve over time quickly, embodiments exclude data captured when the observability is low.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

LIST OF REFERENCE SIGNS

| | |
|---|---|
| 110 | measuring unit |
| 114 | first correction unit |
| 116 | second correction unit |
| 120 | friction estimation unit (estimator) |
| 122 | driving state estimation module |
| 124 | friction estimation module |
| 125 | feedback |
| 126 | neural network |
| 130 | modelling unit |
| 135 | base modelling unit |
| 150 | activation unit |

**Claims**

1. A method for estimating a friction coefficient of a vehicle wheel,
   **characterized by including the steps:**

- measuring (S110) of one or more parameters defining part of a vehicle state;
- estimating (S120) the friction coefficient based on a model that describes dependencies of the vehicle state and the friction coefficient;
- updating (S130) the model during operation of the vehicle; and
- providing (S140) the friction coefficient or a parameter depending on the friction coefficient.

2. The method according to claim 1,
**characterized in that**
the step of estimating includes estimating of at least one of the following parameters:

- a longitudinal acceleration,
- a lateral acceleration,
- a longitudinal speed,
- a lateral speed,
- a yaw rate,
- a radius of at least one tire,
- a stiffness of at least one tire.

3. The method according to claim 1 or claim 2,
**characterized in that**
the step of measuring of at least one parameter includes one or more of the following parameters:

- a steering angle,
- a rotating speed of at least one wheel,
- an actual longitudinal acceleration,
- an actual lateral acceleration,
- an actual longitudinal speed,
- an actual yaw rate.

4. The method according to claim 3,
**characterized in that**
the step of updating includes at least one of the following:

- comparing estimated parameters with measured parameters and adapting the model based on the comparison,
- estimating a correction of the radius of at least one tire,
- estimating a correction of the stiffness of at least one tire.

5. The method according to claim 3 or claim 4,
**characterized in that**
at least some of the steps are only carried out upon an activation, wherein the activation is triggered by one or more of the following:

- a condition derived from the measured parameters is fulfilled,
- a condition derived from the estimated parameters is fulfilled,
- one or more of the measured parameters having exceeded a threshold,
- a rate of change of one or more of the measured parameters having exceeded another threshold.

6. The method according to one of claims 1 to 5,
**characterized in that**
the step of estimating utilizes at least one of the following:

- a slip value of at least one wheel,
- a slip angle,
- a mass of at least one wheel,
- a brake pressure,
- the radius of at least one tire,
- the stiffness of at least one tire.

7. The method according to one of claims 1 to 6,
**characterized in that**
the step of estimating includes utilizing at least one of the following:

- a Kalman filtering,
- a machine learning or using the model created by a machine learning,
- a neural network or using the model created by a neural network.

8. The method according to claim 7,
**characterized by** further comprising
creating or improving the model by one or more of the following:

- training a machine learning algorithm with training data derived under predetermined conditions,
- training a neural network algorithm with training data derived under predetermined conditions,
- improving the created model by successive learning during operation of the vehicle.

9. A method for creating a model utilized in a method for estimating a friction coefficient of a vehicle wheel according to one of claims 1 to 8,
**characterized by**

- training a machine learning algorithm with training data derived under predetermined conditions, or
- training a neural network algorithm with training data derived under predetermined conditions.

10. A computer-readable storage device comprising program code for carrying out the method according to one of claims 1 to 9, when the program code is executed on a data processing unit.

11. An apparatus for estimating a friction coefficient of a vehicle wheel,
**characterized by comprising**
a control unit (200) including a processor (210) and a memory (220) with stored instructions that, when executed on the processor, cause the following

- measuring of one or more parameters defining part of a vehicle state;
- estimating the friction coefficient based on a model that describes dependencies of the vehicle state and the friction coefficient;
- updating the model during operation of the vehicle; and
- providing the friction coefficient or a parameter depending on the friction coefficient.

12. The apparatus of claim 11,
**characterized by** comprising at least one of the following:

- a Kalman filter,
- a machine learning module,
- a neural network engine,

to implement the estimation of the friction coefficient.

13. A vehicle comprising an apparatus according to claim 11 or claim 12.

Fig. 1

Fig. 2A

$$\dot{x} = f(x, u)$$
$$x = [v_x, v_y, \dot{\psi}, a_x, a_y]$$

130

125

K     $\mu$

120

$$u_{mess} = [\dot{\psi}, a_x, a_y]$$

110

Fig. 2B

120,130

dynamical filter

state estimate 122

friction estimate 124

$\hat{x} = [v_x, v_y, \dot{\psi}, a_x, a_y]$

$\hat{x} = [v_x, v_y, \dot{\psi}, a_x, a_y, \mu]$

150

activation

114

$r_{dyn}$- correction

116

adaptation tire parameter B

110

$u = [\delta_i, \omega_i, a_x]$;

$y = [v_x, \dot{\psi}, a_x, a_y]$

Fig. 3

Fig. 4A

Fig. 4B

Fig. 5

Fig. 6

Fig. 7

## EUROPEAN SEARCH REPORT

Application Number

EP 22 17 8633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 508 102 B1 (MARGOLIS DONALD L [US] ET AL) 21 January 2003 (2003-01-21) | 1-6,10, 11,13 | INV. B60T8/172 |
| Y | * column 1, line 11 - line 29 *<br>* page 3, line 14 - line 37 *<br>* page 4, line 24 - line 44 *<br>* page 5, line 21 - line 24 *<br>* page 9, line 15 - page 10, line 4 *<br>* figures 2a-2c,3 *<br>* claims 1-20 * | 7-9,12 | B60T8/174 |
| X | EP 0 775 617 A2 (TOYOTA MOTOR CO LTD [JP]) 28 May 1997 (1997-05-28) | 1-4,6, 10,13 | |
| Y | * figures 1-7 * | 5,7-9,12 | |
| X | DE 10 2017 214053 A1 (BOSCH GMBH ROBERT [DE]) 14 February 2019 (2019-02-14) | 1,7-13 | |
| Y | * claims 1-10 * | 2-9,12 | |
| Y | DE 10 2020 204434 A1 (BOSCH GMBH ROBERT [DE]) 7 October 2021 (2021-10-07)<br>* paragraphs [0013], [0030], [0036] *<br>* claims 1-11 * | 7-9,12 | TECHNICAL FIELDS SEARCHED (IPC)<br><br>B60T<br>B60W |
| Y | DE 10 2019 211052 A1 (BOSCH GMBH ROBERT [DE]) 28 January 2021 (2021-01-28)<br>* paragraph [0024] * | 9,12 | |
| Y | EP 3 851 346 A1 (VOLVO TRUCK CORP [SE]) 21 July 2021 (2021-07-21)<br>* paragraphs [0053], [0054], [0056], [0062] * | 2,7-9,12 | |
| Y | EP 3 028 909 A1 (GOODYEAR TIRE & RUBBER [US]) 8 June 2016 (2016-06-08)<br>* paragraphs [0013], [0022] *<br>* claim 4 * | 2,6,7 | |

-/--

The present search report has been drawn up for all claims

| Place of search | Date of completion of the search | Examiner |
|---|---|---|
| Munich | 11 November 2022 | Colonna, Massimo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/048144 A1 (THYSSENKRUPP PRESTA AG [LI]; THYSSENKRUPP AG [DE]) 18 March 2021 (2021-03-18) * page 5, line 12 – line 15 * ----- | 2,3,5 | |
| Y | US 2018/015931 A1 (BERNTORP KARL [US] ET AL) 18 January 2018 (2018-01-18) * paragraph [0079] * * claims 1-3 * ----- | 2-4 | |
| | | | TECHNICAL FIELDS SEARCHED (IPC) |

The present search report has been drawn up for all claims

| Place of search | Date of completion of the search | Examiner |
|---|---|---|
| Munich | 11 November 2022 | Colonna, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 8633

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2022

| Patent document cited in search report | | Publication date | Patent family member(s) | | Publication date |
|---|---|---|---|---|---|
| US 6508102 | B1 | 21-01-2003 | NONE | | |
| EP 0775617 | A2 | 28-05-1997 | DE 69614975 | T2 | 25-04-2002 |
| | | | EP 0775617 | A2 | 28-05-1997 |
| | | | JP 3060923 | B2 | 10-07-2000 |
| | | | JP H09142280 | A | 03-06-1997 |
| | | | KR 970026703 | A | 24-06-1997 |
| | | | US 5747682 | A | 05-05-1998 |
| DE 102017214053 | A1 | 14-02-2019 | NONE | | |
| DE 102020204434 | A1 | 07-10-2021 | NONE | | |
| DE 102019211052 | A1 | 28-01-2021 | CN 112298189 | A | 02-02-2021 |
| | | | DE 102019211052 | A1 | 28-01-2021 |
| EP 3851346 | A1 | 21-07-2021 | CN 114454865 | A | 10-05-2022 |
| | | | CN 114454866 | A | 10-05-2022 |
| | | | CN 114938644 | A | 23-08-2022 |
| | | | EP 3851345 | A1 | 21-07-2021 |
| | | | EP 3851346 | A1 | 21-07-2021 |
| | | | EP 4090561 | A1 | 23-11-2022 |
| | | | JP 2022068844 | A | 10-05-2022 |
| | | | KR 20220054209 | A | 02-05-2022 |
| | | | KR 20220122769 | A | 02-09-2022 |
| | | | US 2022126799 | A1 | 28-04-2022 |
| | | | US 2022126801 | A1 | 28-04-2022 |
| | | | WO 2021144010 | A1 | 22-07-2021 |
| EP 3028909 | A1 | 08-06-2016 | EP 3028909 | A1 | 08-06-2016 |
| | | | US 9340211 | B1 | 17-05-2016 |
| WO 2021048144 | A1 | 18-03-2021 | CN 114375269 | A | 19-04-2022 |
| | | | DE 102019213911 | A1 | 18-03-2021 |
| | | | EP 4028294 | A1 | 20-07-2022 |
| | | | WO 2021048144 | A1 | 18-03-2021 |
| US 2018015931 | A1 | 18-01-2018 | CN 109476287 | A | 15-03-2019 |
| | | | EP 3484755 | A1 | 22-05-2019 |
| | | | JP 6576578 | B2 | 18-09-2019 |
| | | | JP 2019513613 | A | 30-05-2019 |
| | | | US 2018015931 | A1 | 18-01-2018 |
| | | | US 2018222487 | A1 | 09-08-2018 |
| | | | WO 2018012559 | A1 | 18-01-2018 |

EPO FORM P0459

For more details about this annex : see Official Journal of the European Patent Office, No. 12/82